Europäisches Patentamt

(19) European Patent Office

Office européen des brevets

(11) Publication number: **0 282 430**
A2

(12) # EUROPEAN PATENT APPLICATION

(21) Application number: **88600001.7**

(22) Date of filing: **05.02.88**

(51) Int. Cl.⁴: **F 16 H 37/02**
**F 16 H 33/04**

(30) Priority: **05.02.87 GR 870191   23.06.87 GR 870979**

(43) Date of publication of application:
**14.09.88 Bulletin 88/37**

(84) Designated Contracting States:
**DE ES FR GB IT NL SE**

(71) Applicant: **Botsis, Nicolaos**
**Dramas 41-43**
**GR-10443 Athens (GR)**

(72) Inventor: **Botsis, Nicolaos**
**Dramas 41-43**
**GR-10443 Athens (GR)**

(54) **Self-adjusted power transmission with infinitely variable speed ratio employing toothed epicyclic gears.**

(57) Self adjusted power transmission with infinitely variable speed ratio employing toothed epicyclic gears.

The invention consists of two epicyclic systems using a number of controlling mechanisms (Claims 2, 3 and 4) in a way (Claim 1) to result in a self-adjusting C.V.T. system, having also the ability of brake energy storage and recirculation (Claim 5).

FIGURE 1

Bundesdruckerei Berlin

**Description**

SELF-ADJUSTED POWER TRANSMISSION WITH INFINITELY VARIABLE SPEED RATIO EMPLOYING TOOTHED EPICYCLIC GEARS

1. Introduction and general description of the system

The use of an infinitely varying transmission is advantageous for a great number of applications. Such transmissions are the DAF VARIOMATIC, the PERBURY GEARBOX and others.

The design that will be presented in this report, with a claim for a patent, is a continuously variable transmission (C.V.T.) using toothed epicyclic gear systems and a number of governing arrangements enabling it to be self-adjusted all through a wide speed ratio range.

Epicyclic gear trains, in general, combine a number of subgroups of simple, three terminal, epicyclic systems. Each of these three elements can be input or output or be locked, thus permitting a number of speed ratio changes. such systems are the WILSON TRANSMISSION, the D.D.A. automatic transmission systems and others.

The central idea of the invention(s) that will be presented here is based on the following property of epicyclic systems, "If, in a three terminal epicyclic gearbox with one input and two outputs, there is a way to control the speed of one of the two output shafts, continuously from zero to a maximum rotational speed, by means of a non-power-consuming arrangement then, adding these two outputs as inputs to a second three terminal epicyclic system results in a continuously variable transmission."

Figures 1, 2, 3 and 4 show a number of implementations of the invention(s).

In Figure 1 the feedback control mechanism consists of a "nut-screw" coupling, a splined (sliding) coupling and a Watt mechanism.

In Figure 2 the control system consists of the same as per Figure 1 elements with the addition of an electric generator. The field of the generator is variable, controlled by the horizontal movements of the "nut".

In Figure 3 the arrangement is the same as per Figure 1 with a spring replacing the Watt mechanism.

In Figure 4 the control arrangement is the same as per Figure 1 but the implementation includes an "oneway" clutch system between the splined coupling and the gear (C2). This arrangement offers the ability to recirculate the braking energy by storing it in a flywheel (see flywheel hybrid vehicles). Depending on the design and the type of use, a second "oneway" clutch can be employed to couple the screw and the sun gear of the input epicyclic (S1).

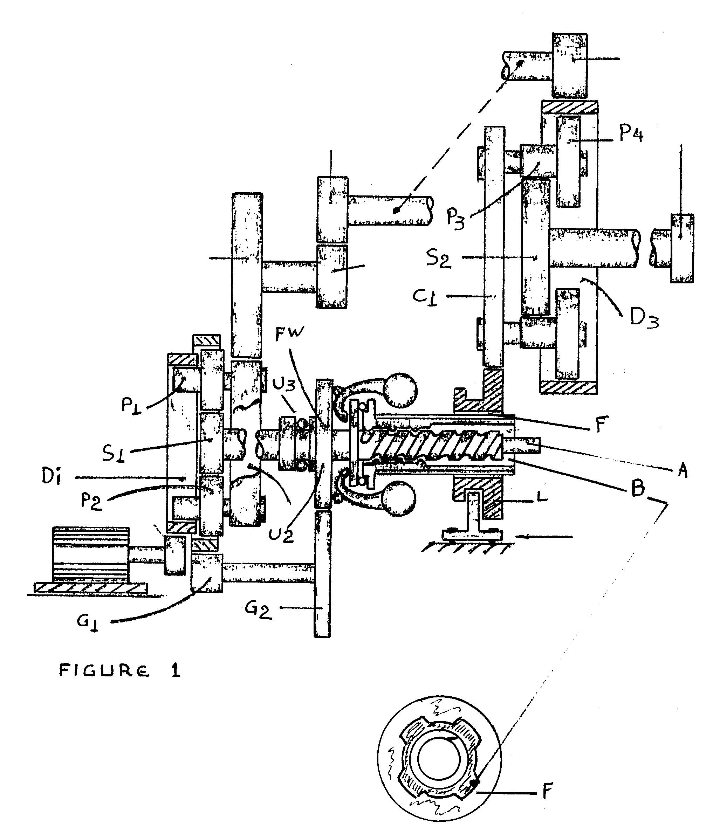

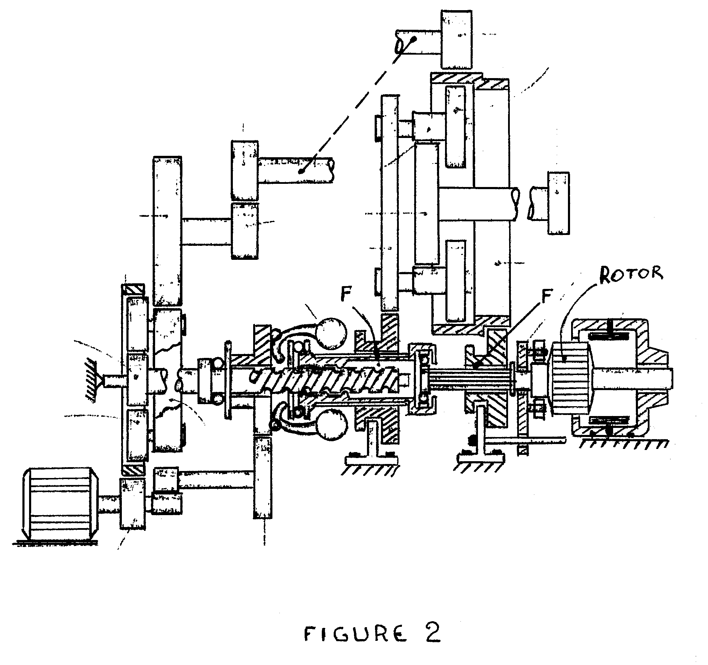

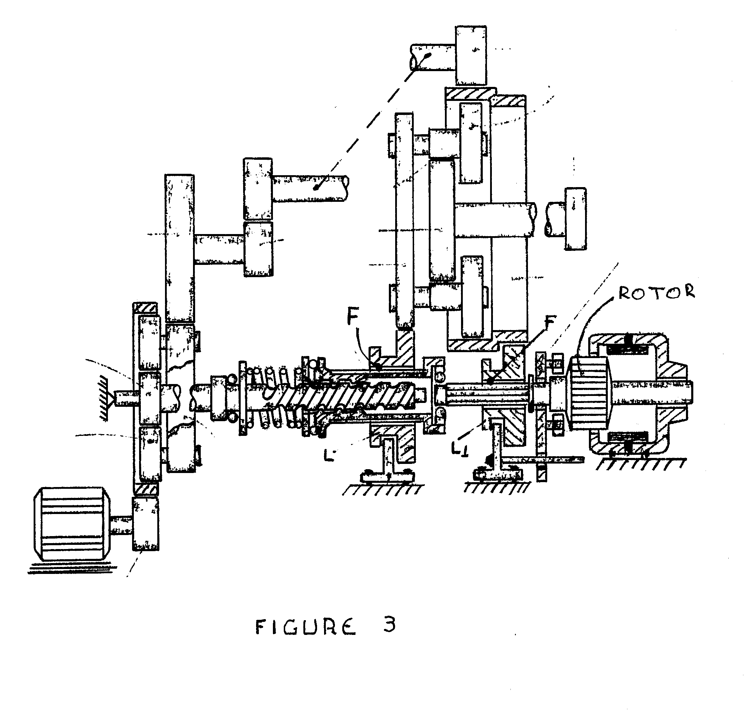

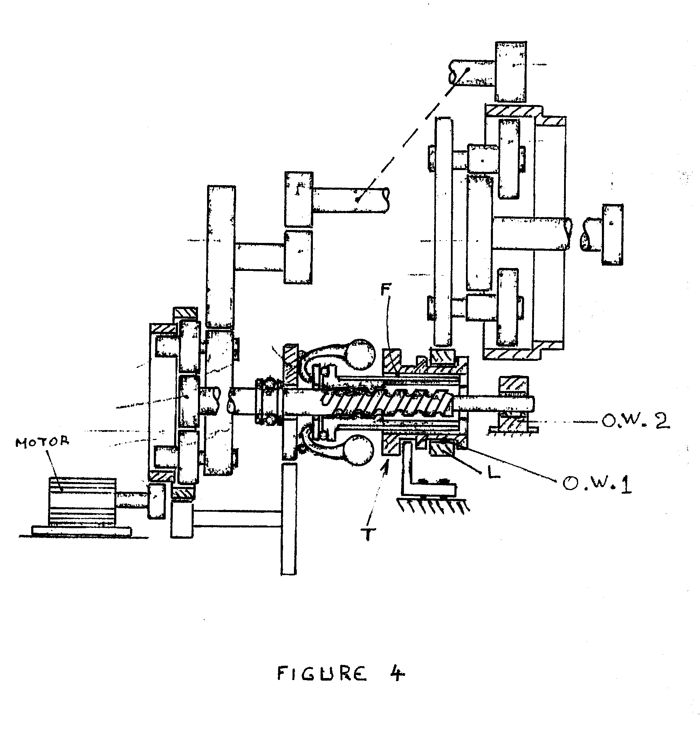

We will proceed with the description and performance analysis of the system of Figure 1 as we can consider the rest (Figures 2, 3 and 4) to be variations of the former which constitutes the central idea of the invention.

2. Description and performance analysis of the invention.

The system shown in Figure 1 consists of the following basic elements:

a) The input epicyclic system which has four terminals. One of these terminals is the input to the whole system from the power source and the rest are outputs (Di,D2,S1 and C1 respectively, see Figure 1).

(b) The output epicyclic system with three terminals. One of these terminals is the power output and the other two are inputs from the input epicyclic (C2,D3 and S2 respectively. see Figure 1

c) A Watt mechanism which acting through a thrust bearing on the "nut" (B) implements the coupling with the screw (A) ("nut-screw" coupling). The power is transmitted from the nut (B) to the gear of the carrier (C2) of the output epicyclic through a splined (sliding) coupling (F) to allow for the relative motion between the nut (B) and the screw (A) during transients.

We shall now proceed with the operational analysis of each of the above elements together with a more explicit description of the components that they consist of.

2.1 The steady state operation of the system.

During a steady state condition the following hold true

a) All masses of the system must rotate at constant speed (hence the Watt mechanism must also have constant speed as it is driven by D2).

b) The "opening" of the Watt is constant.

2.1.1 Steady state operation analysis of the Watt mechanism controller

The centrifugal force of the Watt acts via the pivot (V) on the nut (B) through the thrust bearing (U1). The pivot is situated on the gear (Ew). This gear (Ew) is fitted on the shaft of (S1) employing the axial bearing (U2) and the thrust bearing (U3) which provides the necessary axial reaction.

The gear (Ew) (i.e. the Watt's plate) is driven by the drum (D2) of the input epicyclic via the gears (G1) and (G2).

During a steady state,

$$T2 = Tn + T4 = T3*Z \quad \text{RELATION 1}$$

and

$$N2 = (1/Z)*N3 \quad \text{RELATION 2}$$

where,

T2, is the torque of (S1)

TN, is the torque of (B) (due to the Watt)

T4, is the torque of gear (G3)

T3, is the torque of (Ew)

N2, is the rotational speed of (S1)

N3, is the rotational speed of (Ew)

and

Z, is a constant due to the gear ratios from (D2) to (Ew), the geometry of the Watt mechanism and the force to torque transfer function of the "nut-screw" coupling.

2.1.2 Steady state performance analysis of the input epicyclic system

For simplicity we will assume that:

    a) Di = D2

    b) P1 = P2

The rotational speed relation for this four terminal epicyclic is:

$$(Ni-N3-N1)/(Ni-N2-N1) = S1/Di \quad \text{RELATION 3}$$

and the steady state torque equilibrium condition gives: $Ti = T1 + T2 + T3$    RELATION 4

Finally for power conservation (assuming zero losses): $Ti^*Ni = T1^*N1 + T2^*N2 + T3^*N3$   RELATION 5

where,

Ti, is the input torque acting on (Di)

T1, is the torque of (C1)

Di,S1 are the number of teeth of the gears (Di) and (S1)

Ni, is the rotational speed of (Di), and

N1, is the rotational speed of (C1)

2.1.3 Steady state performance analysis of the output epicyclic system

For simplicity, we consider that,

P3 = P4

For torque equilibrium at steady state,

To + T4 + T5

where,

To, is the output torque via (S2)

T4, is the torque of (C2)

T5, is the torque of (D3)

Power conservation, assuming no losses, gives:

$$To^*No = T4^*n4 + T5^*N5$$

where,

No, is the rotational speed of (S2)

N4, is the rotational speed of (C2)

N5, is the rotational speed of (D3)

and finally the speed relation of this simple (three terminal) epicyclic is:

$$(N5-N4)/(No-N4) = (-1)^*S2$$

From the above relations, we deduce that,

$T4 = To^*(1 + S2/D3)$

$T5 = To^*(-S2/D3)$

But,

$T4 = T2^*K$

where,

K, is the drive ratio from (S1) to (C2).

Hence,

$T2 = To^*(1 + S2/D3)^*K$    RELATION 6

2.1.4 Conclusions

The above analysis has yield a system of six equations (Relations 1 to 6) with seven variables T1, N1, T2, N2, T3, N3, To on the assumption that Ti, Ni are given constants.

This means that for a given power input (Ti,Ni) there is an one to one correspondence of the rotational speed of the sun gear (S1) and the output torque, To, hence, the value of the produced torque by the gearbox controls the value of the rotational speed of (S1) and viceversa. This proves that the system is self-adjusted.

Also, since all these operations are basically controlled by a Watt mechanism which can vary only in a continuous way, means that the system is a continuously variable transmission.

2.2 Dynamic performance analysis of the system.

In the present we will only analyze the system qualitatively for reasons that we will explain later.

The opening of the Watt mechanism is controlled by load due to the following two reasons,

    a) The torque, T4, that is applied on the nut (B) is proportional to the torque of the load (To) (see Relation 6).

    b) Due to the coupling arrangements between the splined coupling, nut and screw, the angle (opening) of the Watt will change with changes in To.

The above will result in a new steady state condition without changing the initial assumption, that is constant Ti and Ni.

In conclusion, it is generally accepted to use experimental methods for the determination of design parameters related with the dynamic response of a complex mechanical system. For this reason the exact quantitative analysis of the dynamic response of the system(s) will be integrated in parallel with the costruction of experimental models.

## Claims

1. The power transmission arrangement that employs a splined coupling and a nut-screw coupling as described (Figures 1, 2, 3 and 4).

2. The in series coupling of the elements of Claim 1 with a Watt mechanism in the way that has been described (Figure 1) resulting in a self-controlled continuously variable transmission system (C.V.T.).

3. The in series coupling of the elements of Claim 1 with a spring (Figure 3) and the addition of an electric generator of variable field, controlled by the horizontal movements of nut (B), resulting in a self-controlled C.V.T. system.

4. The in series coupling of the elements of Claim 2 with the Watt mechanism driven directly by the motor (Figure 2) and the addition of an electric generator in the same way as in Claim 3 resulting in a self-adjusted C.V.T. system.

5. The in series coupling of the elements of Claim 2 with the addition of two one way clutches (OW1) and (OW2) (see Figure 4). The gears (L) and (T) (see Figure 4) can drive a flywheel, employing a differential (not shown) to result in a self-adjusting C.V.T. system with the ability of brake energy recirculation.

0282430

FIGURE 1

0282430

FIGURE 2

ROTOR

F

F

L

L

FIGURE 3

FIGURE 4